# EUROPEAN PATENT APPLICATION

(11) **EP 1 803 343 A1**
(43) Date of publication of application: **04.07.2007**
(21) Application number: 06386004.3
(22) Date of filing: 24.03.2006
(51) Int. Cl.: A01D 34/66, A01D 34/80, A01D 34/86

(54) **Cutting machine for weeds growing at rice plantations**

(30) Priority: 27.12.2005 GR 2005100624
(71) Applicant: Nalbantis, Vasilios, 57600 Malgara Thessalonikis (GR)
(72) Inventor: Nalbantis, Vasilios, 57600 Malgara Thessalonikis (GR)
(74) Representative: Azmani, Evangelia

(57) **Abstract**

It is a machine that consists of two wing sections (1a,1b) and one centre section (1c). The machine is assembled on the front part of a tractor (14) that bears solid iron wheels (9,9a), in order to move easily on muddy lands.

The rear part of the tractor bears 3 oil pumps (11) that supply the 12 hydraulic motors (4), on the wing and centre sections, which transmit the motion to the cutters (2) in order to cut the weeds.

## Description

This invention refers to the manufacturing of a machine that helps us to clean rice fields from uncultivated weeds (tares) that create problems to the development of rice plants.

To date, there was no machine that dealt with this problem radically.

Some machinery that was used, either destroyed large quantities of rice plants, or did not cut efficiently the weeds.

Moreover, the chemical means that were used (powders, liquids, sprays) resulted to the destruction of the rice grains.

In contrary, by our machinery, we have the possibility to destroy effectively the weeds and this is due to the following reasons.

The cutters can be vertically shifted, according to the height of the weeds, as well as horizontally shifted at gradients or they can be totally shifted horizontally.

There is an electronic mass that is immediately sensitized, according to the height of the weeds and an order is given to the hydraulic system of the machine, in order to activate the cutters at the desired height and level of the field.

A practical implementation is presented, with references, at the attached designs:
Figure (1) exhibits the front part of the machine.
Figure (2) shows the lateral side of the machine, attached to the tractor, at a closed position.
Figure (3) shows the lateral side of the machine at an opened position.

The machine consists, by reference to the designs, of:

Two axles (1 a), (1b) and one base (1 c) on which four (4) hydraulic motors are placed, that is, twelve (12) in total.

The motors are set in motion by tubes (8) from three pumps (11) that are located at the rear part of the tractor (14), where there are also 3 oil filters (10), a tank (12) and a cooler (ventilator) (13).

The motion of the motors is finally transmitted to the cutters (2) which are moved in couples, in reverse directions, so when they align, they cut effectively the top of the weeds.

The tractor (14) bears solid iron wheels (9a), (9b), in order to move easily on the muddy fields.

The closing of the two axles is accomplished by hydraulic bottles (5), (5a), and the machine is moved upwards and downwards by an hydraulic bottle (17) that is activated by the order of the electronic mass (6) that is located on the frame (7) of the base (1c) and is executed by an arm system (3), (3a).

The axles bear protective covers (15) and a barrier (16) to avoid the scattering of the cut weeds.

The machine is installed in the front part of the tractor (14).
The function of the machinery has as follows:

The initial movement derives from the tractor PTO axle, which is transmitted to the 3 pumps (11) of the hydraulic system that are sent through pipes (8) to the 12 hydraulic motors (4), located in front of the axles (1 a) (1b) and the base (1c). The motors are connected with the cutters (2) to which they give a rotational motion.

The electronic mass (6) assists in maintaining the anterior cutter axles (1 a) (1b) in balance at any gradient. The electronic mass receives an electronic command and is programmed to keep the balance of the axles. This is achieved by the help of an electrical - hydraulic circuit that originally gives a command to the electrical valve, which converts the electronic commands into hydraulic commands finally with the use of a hydraulic bottle (17). Thus, the cutters are always at the proper working position, resulting to the cutting of the weeds (tares).

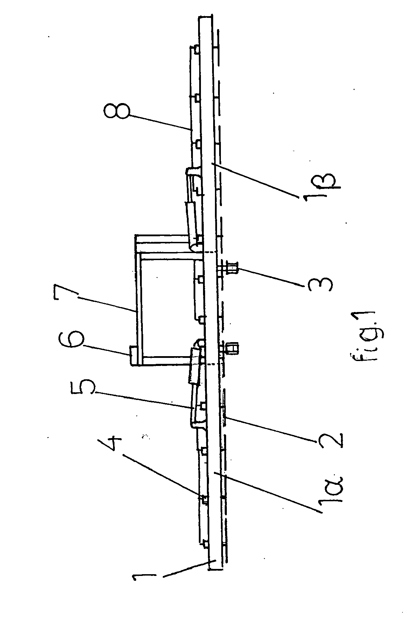

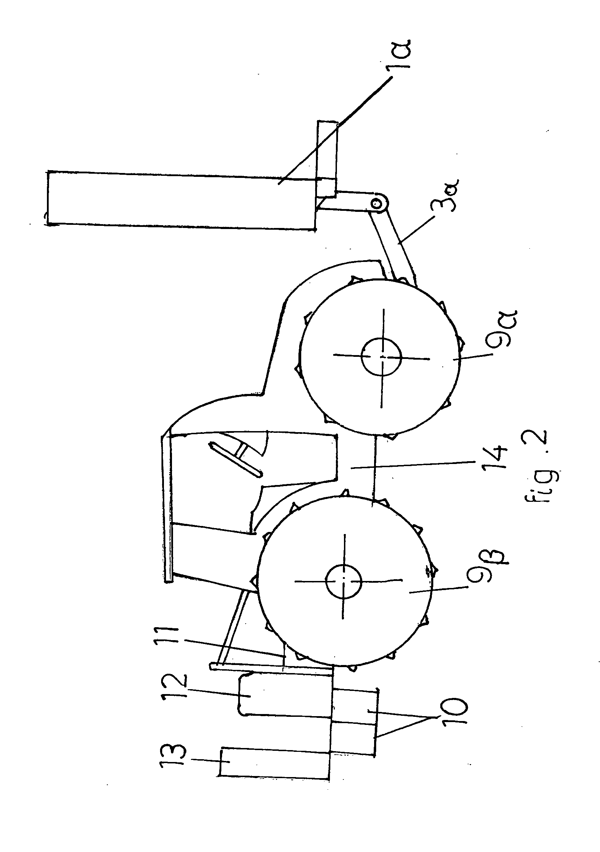

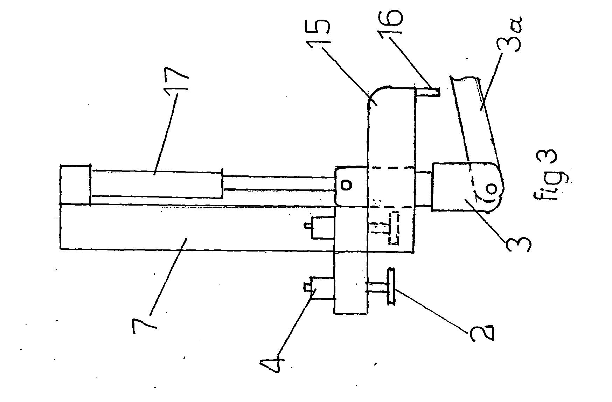

## Claims

1. Cutting machine for weeds (tares) of rice plantations, that is **characterized by** its structure, that is: two axles (1a), (1b) and one base (1 c) on which 12, in total, hydraulic motors (4) are installed, that are put in motion by the liquid that passes through the pipes (8), by 3 oil pumps (11), located at the rear part of the tractor (14), on which the machine is installed. The pumps bear 3 oil filters (10), a tank (12) and a cooler (ventilator) (13). The movement of the hydraulic motors (4) is finally transmitted to the cutters (2).
The closing of the two axles (1a), (1b) is done by the hydraulic bottles (5), (5a) and the upward and downward movement of the machine is done by the hydraulic bottle (17), that is activated by the electronic mass (6), located on the frame (7) of the base (1c) and is executed by the arm system (3), (3a). The axles bear protective covers (15) and a barrier (16). Lastly, the tractor bears solid iron wheels (9), (9a).
